# FASCICULE DE BREVET EUROPEEN

(11) **EP 1 973 123 B1**
(45) Date de publication et mention de la délivrance du brevet: **08.05.2013**
(21) Numéro de dépôt: 08152664.2
(22) Date de dépôt: 12.03.2008
(51) Int. Cl.: H01B 13/14, B29C 35/02, B29C 47/02, B29C 47/88

(54) **Procédé de fabrication d'une couche reticulée pour cable d'energie et/ou de télécommunication**
Herstellungsverfahren einer vernetzten Schicht für Strom- und/oder Telekommunikationskabel
Method of manufacturing a cross-linked layer for a power and/or telecommunications cable

(30) Priorité: 19.03.2007 FR 0753897
(43) Date de publication de la demande: 24.09.2008
(73) Titulaire: Nexans, 75008 Paris (FR)
(72) Inventeur: Goutille, Yannick, 69100 Villeurbanne (FR); Mazel, Christelle, 38300 Bourgoin (FR); Avril, Roland, 69004 Lyon (FR)
(74) Mandataire: Feray, Valérie

(56) Documents cités:
- WO-A-00/39810
- WO-A-99/27015
- FR-A1- 2 169 035

## Description

La présente invention se rapporte à un procédé de fabrication d'une couche réticulée pour câble d'énergie et/ou de télécommunication par voie peroxyde sous l'action de la chaleur.

Qu'il soit électrique ou optique, destiné au transport d'énergie ou à la transmission de données, un câble est schématiquement constitué d'au moins un élément conducteur électrique ou optique s'étendant respectivement à l'intérieur d'au moins un élément isolant ou de protection.

Il est à noter qu'au moins un des éléments isolants peut également jouer le rôle de moyen de protection spécifique formant une gaine, notamment pour les câbles électriques.

Dans la présente invention, la couche réticulée peut être un élément isolant ou une gaine de protection.

De manière préférée, le câble selon la présente invention s'applique aux conducteurs électriques isolés.

Pour la fabrication de câbles électriques comportant une isolation en matières thermoplastique ou élastomérique réticulées, par exemple en polyéthylène réticulé, on connaît des procédés dans lesquels lesdites matières sont réticulées par voie peroxyde sous l'action de la chaleur, en bain de sel, en bain de liquide ou en lit fluidisé à la pression atmosphérique ou à une pression voisine de cette dernière.

Ce procédé simple et économique décrit dans le document FR-2 169 035 ne permet toutefois pas de limiter de façon significative la formation de pores dans la matière thermoplastique ou élastomérique réticulée.

En effet, les peroxydes généralement utilisés dans ce type de procédé donnent des produits gazeux et volatils, dits produits de scission, qui conduisent à la formation desdits pores lors de l'étape de réticulation.

Le document WO 00/39810 décrit un procédé de fabrication d'une couche pour câble d'énergie et / ou de télécommunication en une seule étape d'extrusion d'un mélange comprenant un polymère réticulable tel que le LDPE, l'EVA ou l'EPR, un peroxyde tel que le peroxyde de dicumyle et un capteur de gaz notamment l'oxyde de calcium.

Le document FR 2 159 533 divulgue un procédé de fabrication d'un article à plusieurs couches, notamment un câble électrique couvert de matière plastique durcie. En particulier, il divulgue un tel procédé comprenant les étapes - d'extrusion d'une composition comprenant un polymère réticulable, plus précisément, un terpolymère éthylène-propylène-diène et un peroxyde comme le peroxyde de dicumyle, - et de réticulation du mélange extrudé sous l'action de la chaleur dans un bain de durcissement, en particulier un bain de contenant un milieu chauffant liquide tel qu'un mélange eutectique fondu de sels minéraux.

De même, la décomposition prématurée des polymères, charges et/ou additifs utilisés dans ce type de procédé peut générer des produits gazeux et volatils.

Par conséquent, les caractéristiques de la couche isolante, notamment ses propriétés mécaniques, peuvent être dégradées de façon significative.

De plus, durant la réticulation d'un matériau bicouche comprenant une première couche réticulée telle que définie ci-avant entourant un élément conducteur et une deuxième couche réticulée entourant directement ladite première couche, ce phénomène dégrade non seulement la première couche mais également la deuxième couche du matériau bicouche.

En effet, les produits gazeux et volatils s'accumulent d'une part dans la première couche et d'autre part migrent à l'interface des deux couches et dans la deuxième couche pendant l'étape de réticulation, après la coextrusion du matériau bicouche.

De ce fait, les propriétés mécaniques des deux couches sont dégradées et ces dernières ne peuvent plus adhérer l'une sur l'autre.

Aussi le problème technique à résoudre, par l'objet de la présente invention, est de proposer un câble d'énergie et/ou de télécommunication comportant une couche réticulée permettant d'éviter les problèmes de l'état de la technique liés à l'utilisation des peroxydes, en offrant notamment des propriétés mécaniques améliorées.

La solution du problème technique posé réside en ce que la présente invention propose un câble d'énergie et/ou de télécommunication comprenant une couche réticulée pouvant être obtenue à partir d'un procédé de fabrication comprenant les étapes suivantes :
- extruder un mélange comprenant un polymère réticulable, un peroxyde et un capteur de gaz, et
- réticuler ledit mélange extrudé sous l'action de la chaleur en l'immergeant dans un bain de sel, un bain de liquide ou un lit fluidisé, pour former ladite couche réticulée.

Avantageusement, la couche ainsi obtenue présente une porosité limitée de façon significative, voire inexistante.

De plus, ladite couche réticulée est fabriquée par un procédé simple, économique et rapide.

On appelle capteur de gaz un composé chimique capable de réagir avec un produit gazeux et/ou volatil pour donner un produit solide.

A titre d'exemple, le produit gazeux et/ou volatil peut être un gaz acide tel que par exemple du dioxyde de carbone.

De préférence, le capteur de gaz est l'oxyde de calcium (CaO).

L'oxyde de calcium réagit avantageusement avec le dioxyde de carbone pour former le carbonate de calcium.

Le CaO permet également de capter l'humidité qui peut être résiduelle dans les polymères, les charges et/ou les additifs utilisées dans la présente invention.

L'oxyde de calcium réagit avec l'eau par une réaction exothermique produisant l'hydroxyde de calcium.

Ainsi, les porosités générées par la présence d'humidité sont limitées de façon significative lors de la réticulation du mélange.

Dans un mode de réalisation particulier, le capteur de gaz est d'au plus 50 parties en poids pour 100 parties en poids de polymère dans le mélange.

Au-delà d'une telle quantité, il est difficile d'atteindre un niveau de propriétés mécaniques satisfaisant.

Dans un mode de réalisation particulier, le peroxyde dudit mélange est un peroxyde di-tertiaire d'alkyle ou d'aralkyle choisi parmi le peroxyde de di-ter-butyle, le peroxyde de dibenzoyle, le peroxyde de di(ter-butylperoxyisopropyl)benzene, le peroxyde de dicumyle, et le 2,5-dimethyl-2,5di(ter-butylperoxy)hexane (DBPH), de préférence le peroxyde de dicumyle.

Afin d'éviter la décomposition prématurée du peroxyde, l'étape d'extrusion est effectuée à une température inférieure à la température de décomposition du peroxyde.

Les exemples de peroxydes mentionnés ci-avant ne sont pas limitatifs et les peroxydes utilisés dans le cadre de la présente invention peuvent avoir des températures de décompositions élevées, permettant ainsi de limiter de façon significative le risque de réticulation prématurée tout en augmentant la vitesse d'extrusion.

L'agent de réticulation peroxyde est généralement utilisé à une quantité ne dépassant pas 15 parties en poids par rapport à 100 parties de polymère dans le mélange.

La réticulation avec les peroxydes peut en outre être accélérée de façon connue par l'ajout de co-agents dans le mélange comme par exemple des composés di ou trivinyliques ou allyliques.

Dans un mode de réalisation préféré, la réticulation du mélange extrudé s'effectue à la pression atmosphérique, ou en d'autres termes à l'atmosphère ambiante ou à une pression voisine de cette dernière.

La mise en oeuvre de l'étape de réticulation s'en trouve ainsi facilité et reste très économique.

Toutefois, l'étape de réticulation peut également s'effectuer sous pression réelle généralement comprise entre 1 et 25 bar.

Le polymère réticulable dans le mélange de la présente invention peut comprendre des groupements organiques réticulables bien connu de l'homme du métier comme par exemple des radicaux alkyles (methyl, ethyl, propyl, octyl, octadecyl) ou alkenyles (vinyl, allyl, aryl, aralkyl), alkaryles (phenyl, phenylethyl, benzyl, totyl) ou fluoroalkyles.

Des radicaux fonctionnels du type hydroxyl ou acyloxy peuvent également être présents en faibles proportions dans ledit polymère.

Dans un mode de réalisation particulier, le polymère réticulable est une polyoléfine ou un polyorganosiloxane.

La polyoléfine peut être plus particulièrement un polymère ou un copolymère d'éthylène, choisi de préférence parmi un polyéthylène basse densité (LDPE), un polyéthylène octène (PEO), un copolymère d'éthylène et de propylène (EPR), un copolymère d'éthylène et d'acétate de vinyle (EVA), un copolymère d'éthylène et d'acrylate d'alkyle (comme par exemple un copolymère d'éthylène et d'acrylate de butyle (EBA), un copolymère d'éthylène et d'acrylate de méthyle (EMA) et un copolymère d'éthylène et d'acrylate d'éthyle (EEA)), un copolymère d'éthylène et d'acide acrylique, et un terpolymère d'éthylène, ou leur mélange.

Le polyorganosiloxane peut varier en consistance entre des liquides visqueux et des gommes à haut poids moléculaire, dont les viscosités sont respectivement inférieures à 1.000.000 mPa.s, et d'au moins 1.000.000 mPa.s à 25°C.

On appelle communément les polyorganosiloxanes ayant une viscosité d'au moins 1.000.000 mPa.s à 25°C des gommes de silicone.

De préférence, le mélange de la présente invention peut comprendre des charges renforçantes et/ou non-renforçantes ainsi que des additifs.

Les charges renforçantes sont pour la plupart des silices pyrogénées ayant typiquement une surface spécifique supérieure à 125m²/g. Les liaisons entre la charge et le polymère réticulable permettent d'améliorer les propriétés mécaniques.

Les charges non-renforçantes ont une interaction plus faible avec le polymère réticulable et peuvent être par exemple de la craie, de la poudre de quartz, du mica, du kaolin, de l'hydroxyde d'aluminium, de l'hydroxyde de magnésium ou de l'oxyde de fer.

Ces charges, bien connues de l'homme du métier, sont utilisées pour obtenir des propriétés physiques particulières comme la viscosité ou la dureté Shore et/ou pour améliorer la stabilité thermique ou la tenue au feu.

Le mélange peut inclure des additifs comme des agents anti-structurants, des pigments, des plastifiants ou des stabilisants.

Dans un autre mode de réalisation, le procédé peut concerner un matériau bicouche, ledit matériau comprenant :
- une première couche réticulée obtenue à partir d'un premier mélange selon la présente invention, ledit premier mélange comprenant un polymère réticulable, un peroxyde et un capteur de gaz, et
- une deuxième couche réticulée obtenue à partir d'un deuxième mélange comprenant un polymère réticulable semblable ou différent de celui contenu dans la première couche,
la première couche étant directement en contact avec la deuxième couche.

Lesdits premier et deuxième mélanges sont extrudés simultanément puis réticulés sous l'action de la chaleur en les immergeant dans un bain de sel, un bain de liquide ou un lit fluidisé, pour former ledit matériau bicouche réticulé.

De préférence, le premier mélange et le deuxième mélange sont différents et comprennent respectivement un polyorganosiloxane et un polymère ou copolymère d'éthylène.

Ils comprennent en outre des charges et additifs bien connus de l'homme du métier.

D'autres caractéristiques et avantages de la présente invention apparaîtront à la lumière des exemples qui vont suivre, lesdits exemples étant donnés à titre illustratif et nullement limitatif.

Afin de montrer les avantages obtenus avec les couches réticulées selon la présente invention, le Tableau 1 détaille différents mélanges à base de gomme silicone dont les propriétés mécaniques telles que la résistance à la traction et l'allongement à la rupture, ainsi que la porosité sont étudiées.

Le mélange 1 correspond à un mélange comparatif, tandis que les mélanges 2 et 3 correspondent à des mélanges selon la présente invention.

Les quantités mentionnées dans le Tableau 1 sont exprimées en parties en poids pour 100 parties de polymère, c'est-à-dire pour 100 parties d'une gomme de silicone.

**Tableau 1**

| Mélange | 1 | 2 | 3 |
|---|---|---|---|
| Gomme de silicone | 100 | 100 | 100 |
| Charges et additifs | 60 | 60 | 60 |
| Peroxyde | 1 | 1 | 1 |
| CaO | 0 | 6 | 15 |

L'oxyde de calcium (CaO) utilisé dans les mélanges 2 et 3 est commercialisé par la société MSG Europe.

Les différents mélanges sont préparés selon le protocole suivant.

Le peroxyde et le CaO, si présent dans le mélange, sont ajoutés au composé Silicone sur un mélangeur à cylindre.

Cette étape de mise en oeuvre est réalisée à 25-30°C pendant au plus 30 min.

Dans ces conditions, la température est suffisante pour ramollir et homogénéiser le peroxyde et le CaO dans le composé silicone tout en évitant d'amorcer la décomposition du peroxyde.

Bien entendu, en fonction de la nature des peroxydes incorporés au mélange, la température d'extrusion peut varier entre 30 et 130°C sans amorcer la réticulation du mélange dans l'extrudeuse.

L'extrusion des mélanges peut être réalisée à l'aide d'une extrudeuse monovis, les mélanges étant extrudés sur un fil de cuivre de section 1,5 mm².

Ensuite, les mélanges extrudés sont réticulés sur une ligne de réticulation en bain de sel, la température du bain de sel étant régulée à 220°C, et forment ainsi une couche réticulée.

Les propriétés mécaniques mesurées sur les couches réticulées ainsi obtenues sont résumées dans le tableau 2.

**Tableau 2**

| Couche réticulée | 1 | 2 | 3 |
|---|---|---|---|
| Résistance à la traction (MPa) | < 5 | 8,4 | 7,5 |
| Allongement à la rupture (%) | <120 | 251 | 269 |
| Porosité (appréciation visuelle) | OUI | NON | NON |

On constate une nette amélioration au niveau des porosités qui sont inexistantes visuellement sur les couches réticulées 2 et 3, contrairement à la couche réticulée 1.

Les propriétés mécaniques de ces mélanges extrudés et réticulés à base de polyorganosiloxane, selon la présente invention, ne sont donc plus altérées par la formation des bulles comme en attestent les valeurs de résistance à la traction et d'allongement à la rupture pour les couches 2 et 3.

Le Tableau 3 détaille différents mélanges à base d'élastomères dont les propriétés mécaniques telles que la résistance à la traction et l'allongement à la rupture, ainsi que la porosité sont étudiées.

Le mélange 4 correspond à un mélange comparatif, tandis que les mélanges 5 à 7 correspondent à des mélanges selon la présente invention.

Les quantités mentionnées dans le Tableau 3 sont exprimées en parties en poids pour 100 parties de polymère, c'est-à-dire pour 100 parties d'un mélange de copolymères d'éthylène, constitué en majorité d'EVA.

**Tableau 3**

| Mélange | 4 | 5 | 6 | 7 |
|---|---|---|---|---|
| Copolymères d'éthylène | 100 | 100 | 100 | 100 |
| Charges et additifs | 120 | 120 | 120 | 120 |
| Peroxyde | 7 | 7 | 7 | 7 |
| CaO | 0 | 5 | 10 | 30 |

Pour obtenir les couches extrudées et réticulées à partir des mélanges 4 à 7, on procédé selon le protocole décrit précédemment.

Les propriétés mécaniques mesurées sur les couches réticulées ainsi obtenues sont résumées dans le tableau 4.

**Tableau 4**

| Couche réticulée | 4 | 5 | 6 | 7 |
|---|---|---|---|---|
| Résistance à la traction (MPa) | Non mesurable | 14,8 | 14,4 | 13,6 |
| Allongement à la rupture (%) | Non mesurable | 164 | 170 | 187 |
| Porosité (appréciation visuelle) | Déchirement | NON | NON | NON |

Les résultats obtenus pour la couche réticulée 4 montrent clairement que l'ajout d'un capteur à des mélanges à base d'élastomères permet d'éviter tout gonflement de la couche extrudée pendant sa réticulation.

En effet, les propriétés mécaniques de la couche 4 n'ont pas pu être mesurées suite au gonflement, puis au déchirement de ladite couche pendant la phase de réticulation.

Au contraire, les propriétés mécaniques des mélanges extrudés et réticulés, à base de copolymères d'éthylène, selon la présente invention ne sont pas altérées par la formation des bulles comme en attestent les valeurs de résistance à la traction et d'allongement à la rupture pour les couches 5 à 7.

La présente invention n'est pas limitée aux exemples de mélanges qui viennent d'être décrits et porte dans sa généralité sur toutes les couches réticulées envisageables à partir des indications générales fournies dans l'exposé de l'invention.

## Revendications

1. Procédé de fabrication d'une couche réticulée pour câble d'énergie et/ou de télécommunication comprenant les étapes suivantes :
- extruder un mélange comprenant un polymère réticulable, un peroxyde et un capteur de gaz, et
- réticuler ledit mélange extrudé sous l'action de la chaleur en l'immergeant dans un bain de sel, un bain de liquide ou un lit fluidisé, pour former ladite couche réticulée.

2. Procédé selon la revendication 1, **caractérisé en ce que** le capteur de gaz est l'oxyde de calcium (CaO).

3. Procédé selon la revendication 1 ou 2, **caractérisée en ce que** le capteur de gaz est d'au plus 50 parties en poids pour 100 parties en poids de polymère dans le mélange.

4. Procédé selon l'une quelconque des revendications précédentes, **caractérisé en ce que** le peroxyde est le peroxyde de dicumyle.

5. Procédé selon l'une quelconque des revendications précédentes, **caractérisé en ce que** la réticulation du mélange extrudé est réalisé à la pression atmosphérique.

6. Procédé selon l'une quelconque des revendications précédentes, **caractérisé en ce que** le polymère réticulable est un polyorganosiloxane ou une polyoléfine.

7. Procédé selon la revendication 6, **caractérisé en ce que** la polyoléfine est un polymère ou copolymère d'éthylène.

8. Procédé selon la revendication 7, **caractérisé en ce que** le polymère ou copolymère d'éthylène est choisi parmi un polyéthylène basse densité (LDPE), un polyéthylène octène (PEO), un copolymère d'éthylène et de propylène (EPR), un copolymère d'éthylène et d'acétate de vinyle (EVA), un copolymère d'éthylène et d'acrylate d'alkyle, un copolymère d'éthylène et d'acide acrylique et un terpolymère d'éthylène, ou leur mélange.

9. Procédé selon la revendication 6, **caractérisé en ce que** le polyorganosiloxane est une gomme de silicone.

## Patentansprüche

1. Herstellungsverfahren einer vernetzten Schicht für Energie- und/oder Telekommunikationskabel, das die folgenden Schritte umfasst:
- Extrudieren eines Gemischs, das ein vernetzbares Polymer, ein Peroxid und einen Gassensor umfasst,
- Vernetzen des extrudierten Gemischs unter der Einwirkung von Wärme durch Eintauchen in ein Salzbad, in ein Flüssigkeitsbad oder in ein fluidisiertes Bett, um die vernetzte Schicht zu bilden.

2. Verfahren nach Anspruch 1, **dadurch gekennzeichnet, dass** der Gassensor das Calciumoxid (CaO) ist.

3. Verfahren nach Anspruch 1 oder 2, **dadurch gekennzeichnet, dass** der Gassensor höchstens 50 Gewichtsanteile auf 100 Gewichtsanteile Polymer in dem Gemisch ist.

4. Verfahren nach einen der vorangehenden Ansprüche, **dadurch gekennzeichnet, dass** das Peroxid das Dicumylperoxid ist.

5. Verfahren nach einem der vorangehenden Ansprüche, **dadurch gekennzeichnet, dass** die Vernetzung des extrudierten Gemischs bei atmosphärischem Druck durchgeführt wird.

6. Verfahren nach einem der vorangehenden Ansprüche, **dadurch gekennzeichnet, dass** das vernetzbare Polymer ein Polyorganosiloxan oder ein Polyolefin ist.

7. Verfahren nach Anspruch 6, **dadurch gekennzeichnet, dass** das Polyolefin ein Polymer oder ein Ethylen-Copolymer ist.

8. Verfahren nach Anspruch 7, **dadurch gekennzeichnet, dass** das Polymer oder Ethylen-Copolymer aus einem Polyethylen mit niedriger Dichte (LDPE), einem Octen-Polyethylen (PEO), einem Ethylen- und Propylen-Copolymer (EPR), einem Ethylen- und Vinylacetat-Copolymer (EVA), einem Ethylen- und Alkylacrylat-Copolymer, einem Ethylen- und Acrylsäure-Copolymer und einem Ethylen-Terpolymer oder ihrem Gemisch ausgewählt ist.

9. Verfahren nach Anspruch 6, **dadurch gekennzeichnet, dass** das Polyorganosiloxan ein Silikongummi ist.

## Claims

1. A process for manufacturing a cross-linked layer for power and/or telecommunications cable comprising the following steps:
- extruding a mixture containing a cross-linkable polymer, a peroxide and a gas capture agent,
and
- cross-linking the said extruded mixture under the action of heat by immersing it in a salt bath, liquid bath or fluidised bed to form said cross-linked layer.

2. The process according to claim 1, **characterized in that** the gas capture agent is calcium oxide (CaO).

3. The process according to claim 1 or 2, **characterized in that** the proportion of gas capture agent is no more than 50 parts by weight per 100 parts by weight of polymer in the mixture.

4. The process according to any of the preceding claims, **characterized in that** the peroxide is dicumyl peroxide.

5. The process according to any of the preceding claims, **characterized in that** the cross-linking of the extruded mixture is conducted under atmospheric pressure.

6. The process according to any of the preceding claims, **characterized in that** the cross-linkable polymer is a polyorganosiloxane or polyolefin.

7. The process according to claim 6, **characterized in that** the polyolefin is a polymer or ethylene copolymer.

8. The process according to claim 7, **characterized in that** the polymer or ethylene copolymer is chosen from among a low density polyethylene (LDPE), polyethylene-octene (PEO), a copolymer of ethylene and propylene (EPR), a copolymer of ethylene and vinyl acetate (EVA), a copolymer of ethylene and alkyl acrylate, a copolymer of ethylene and acrylic acid and an ethylene terpolymer, or a mixture thereof.

9. The process according to claim 6, **characterized in that** the polyorganosiloxane is a silicone gum.
